Europäisches Patentamt

European Patent Office

Office européen des brevets

(11) Publication number: **0 390 243**
**A2**

## (12) EUROPEAN PATENT APPLICATION

(21) Application number: **90200585.9**

(51) Int. Cl.⁵: **F16J 15/34**

(22) Date of filing: **13.03.90**

(30) Priority: **28.03.89 GB 8906901**

(43) Date of publication of application:
**03.10.90 Bulletin 90/40**

(84) Designated Contracting States:
**AT BE CH DE DK ES FR GB GR IT LI LU NL SE**

(72) Inventor: **Back, Anthony Charles**
**37 Cranbourne Close**
**Slough, Berkshire(GB)**

(71) Applicant: **JOHN CRANE UK LIMITED**
**Crossbow House 40 Liverpool Road**
**Slough, Berkshire SL1 4QX(GB)**

(74) Representative: **Watts, Peter Graham et al**
**Anthony Cundy & Co. 384 Station Road**
**Dorridge**
**Solihull West Midlands B93 8ES(GB)**

(54) **Mechanical face seals.**

(57) A mechanical face seal for producing a seal between a shaft (10) and housing (11) includes a first seal face member (12) adapted to be secured in fluid tight manner and in fixed axial relationship to the shaft (10) by means of a retaining sleeve (13) and a second seal face member (15) adapted to be secured in fluid tight manner, in fixed rotational relationship but movable axially of the housing (11) by means of a bellows unit (16). The bellows unit (16) is secured to a tubular retaining ring (20), the end of the bellows unit (16) remote from the second seal face member (15) engaging a cylindrical face of a plane cylindrical portion (21) of the retaining ring (20) and being secured thereto in fluid tight manner, the retaining ring (20) having a flange formation (22) by which the retaining ring (20) may be located with respect to the housing (11).

FIG 1

The present invention relates to mechanical face seals and in particular to mechanical face seals in which one seal face member is secured in fluid tight manner with respect to one of a pair of relatively rotatable components, by means of a resilient bellows unit.

In designing a resilient bellows unit for a mechanical face seal, it is necessary that the bellows unit be capable of withstanding the stresses imposed by compression of the bellows unit and the pressure differential that exists across the bellows unit, while having sufficiently low spring rate so that the bellows unit can be compressed to the required degree to permit relative movement of the seal face members to accommodate wear, without applying an excessive axial load across the seal face members. It is consequently desirable to design the bellows unit for operation near its upper stress limit. However due to manufacturing tolerances on the bellows, if the bellows is longer than nominal the extra compression of the bellows will impose additional stresses which may take it over the stress limit, so that the bellows is liable to fail. Furthermore, additional compression will increase the load on the seal face members thus increasing the wear rate.

The present invention provides a mechanical face seal in which manufacturing tolerances in the bellows unit may be accommodated so that the degree of compression and resulting stress levels in the bellows unit can be optimised.

According to one aspect of the present invention a mechanical face seal for providing a seal between a pair of relatively rotatable components comprises, a first seal face member secured in fluid tight manner and in fixed axial and rotational relationship with respect to one component and a second seal face member secured in fluid tight manner in fixed rotational relationship but movable axially of the other component by means of a resilient bellows unit, said bellows unit being secured with respect to its associated component by means of a tubular retaining ring, characterised in that said retaining ring has a plane cylindrical portion and means to locate it axially with respect to the associated component, one end of the bellows unit engaging the plane cylindrical portion of the retaining ring and being secured thereto in fluid tight manner.

With the seal disclosed above, the axial position at which the end of the bellows unit is secured to the plane cylindrical portion of the retaining ring may be adjusted to accommodate variations in the length of the bellows unit due to manufacturing tolerances. In this manner, a bellows unit/retaining ring assembly may be preassembled so that it has a predetermined axial load at a predetermined working height.

According to a further aspect of the present invention, a method of producing a mechanical face seal in which a first seal face member is secured in fluid tight manner and fixed axial and rotational relationship to one of a pair of relatively rotatable components and a second seal face member is secured in fixed rotational relationship but movable axially of the other component by means of a resilient bellows unit, the bellows unit being secured to its associated component by means of a tubular retaining ring, characterised in that said method comprises; compressing the bellows unit axially to a predetermined axial load, locating a tubular retaining ring relative to the bellows unit so that a cylindrical face of a plane cylindrical portion of the retaining ring is engaged by one end of the bellows unit and the other end of the bellows unit is spaced axially of a locating formation on the retaining ring by a predetermined distance, and securing the end of the bellows unit to the cylindrical face of the plane cylindrical portion of the retaining ring in fluid tight manner.

According to a preferred embodiment of the invention, the retaining ring is a press fit with respect to the component with which it is associated and the first seal face member is located on a retaining sleeve which is a press fit with respect to the component with which it is associated. The retaining ring and retaining sleeve may then be mounted with respect to their respective components, by means of a press tool which engages the retaining ring and retaining sleeve in predetermined axial relationship, a load being applied to the press tool to force the retaining ring and retaining sleeve axially with respect to their associated components until the locating formation on the retaining ring is set to an axial position relative to any other datum, for example it abuts a corresponding formation on the component associated with the retaining ring or the press tool engages a stop on the press. In this manner, the seal may be assembled so that the bellows is compressed to provide a predetermined load between the seal face members.

An embodiment of the invention is now described, by way of example only, with reference to the accompanying drawings, in which:

Figure 1 shows a cross sectional view of a seal formed in accordance with the present invention;

Figures 2 to 4 illustrate the method of manufacture of the bellows assembly used in the seal shown in Figure 1; and

Figure 5 illustrates a modification to the seal assembly illustrated in Figure 1.

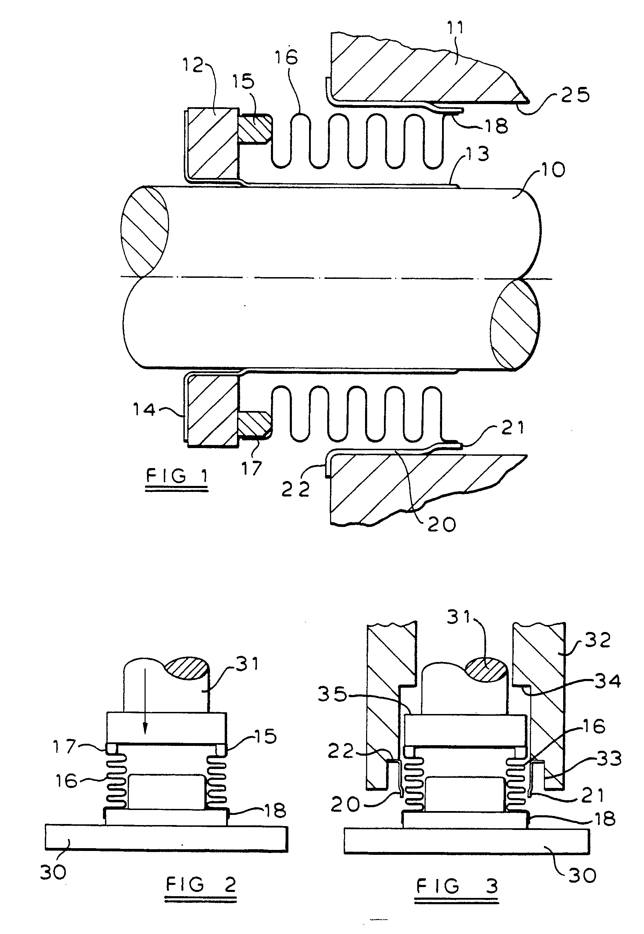

As illustrated in Figure 1, a seal between a rotatable shaft 10 and a housing 11 comprises a first seal face member or seat 12 which is mounted in fixed axial and rotational relationship on the shaft 10. The seat 12 is located on a retaining sleeve 13 which is a press fit on shaft 10. The seat 12 is located axially of the sleeve 13 by means of a flange formation 14. The seat 12 may be an interference fit with respect to the sleeve 13 or may, for example, be sealed with respect thereto by means of an elastomeric cup rubber or be bonded thereto by a suitable adhesive or sealing compound.

A second seal face member 15 is located at one end of a bellows unit 16, a cylindrical end formation 17 at that end of the bellows unit 16 forming a retainer for the seal face member 15. As with the seat 12, the seal face member 15 may be retained in formation 17 by an interference fit or by for example an adhesive or sealing compound.

The other end of the bellows unit 16 has a cylindrical formation 18 which is a slight interference fit with a plane cylindrical portion 21 of a tubular retaining ring 20. The end formation 18 of the bellows unit 16 is secured to the plane cylindrical portion 21 of ring 20 in fluid tight manner, this may be achieved for example by means of welding, brazing or bonding with an adhesive.

The retaining ring 20 is a press fit in bore 25 through the housing 11, which is coaxial with the shaft 10. A flange formation 22 at the end of ring 20 remote from cylindrical formation 21, engages the housing 11 to locate the ring 20 and bellows unit 16 attached thereto, axially with respect to the housing 11.

When assembled, the seal face member 15 will engage the seat 12 and will be maintained in sealing engagement therewith, by axial compression of the bellows unit 16.

The press fit between the sleeve 13 and shaft 10 and between the ring 20 and housing 11 should provide adequate fluid tight seals therebetween. Optionally however, a sealing compound may be applied between the sleeve 13 and shaft 10 and/or between the ring 20 and housing 11. Alternatively, sealing means, for example an O-ring located in an annular groove in the shaft 10 or housing 11 may be used to provide a seal between the shaft 10 and sleeve 13 or between the ring 20 and housing 11. Further sealing means may also be used to provide a seal between the seat 12 and sleeve 13 and/or between the seal face member 15 and bellows unit 16.

As illustrated in Figures 2 to 4, the bellows unit/retaining ring assembly 16/20 used in the seal illustrated in Figure 1 is manufactured in the following stages;

A. As illustrated in Figure 2, the bellows unit 16 with seal face member 15 located in cylindrical end formation 17 is located on load cell 30 and is compressed to a predetermined axial load by means of a ram 31, movement of the ram 31 being controlled by the load cell 30;

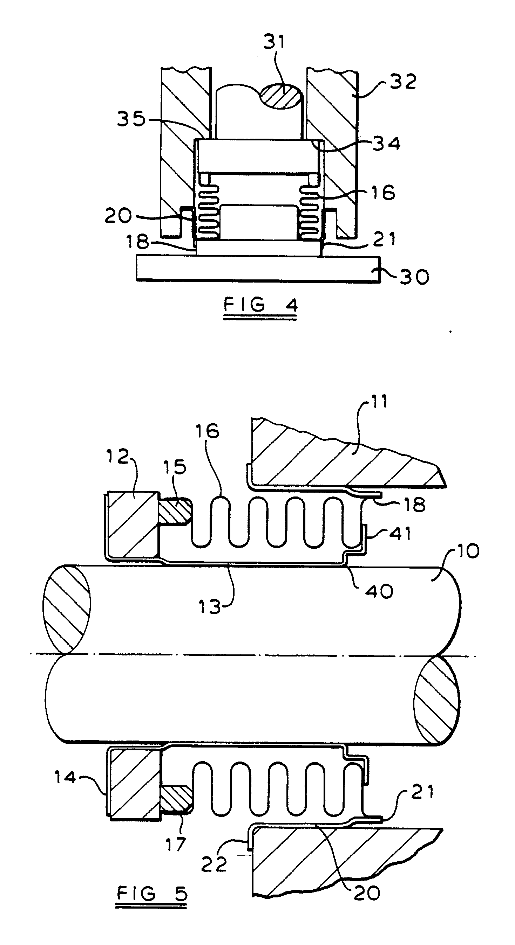

B. As illustrated in Figure 3, the retaining ring 20 is located in a stepped portion 33 at the end of a second ram 32, the second ram 32 being coaxial with the ram 31. The second ram 32 is moved towards the load cell 30 until a shoulder 34 on ram 32 engages a corresponding shoulder 35 on ram 31. At this position, as illustrated in Figure 4, the ring 20 is located such that flange 22 is spaced axially of the sealing face of seal face member 15 by a predetermined amount;

C. In the position illustrated in Figure 4, the end 18 of bellows unit 16 engages the cylindrical portion 21 of ring 20 and is secured thereto in fluid tight manner.

This method of manufacturing the bellows unit assembly 16/20, will ensure that at a predetermined load, the sealing face of seal face member 15 will be spaced accurately with respect to the locating flange 22, and tolerance variations in the length of the bellows unit 16 and retaining ring 20 are accommodated by varying the axial position at which end 18 of bellows unit 16 is secured to the cylindrical portion 21 of ring 20.

The seal is installed by locating the flange 22 of ring 20 and flange 14 of sleeve 13 against axially separated shoulders of a ram and simultaneously pressing the sleeve 13 axially onto the shaft 10 and ring 20 axially into the bore 25 of housing 11 by means of said ram, until the flange 22 of ring 20 is seated against the housing 11. The seat 12 and seal face member 15 will then be located accurately relative to their associated components, so that compression of the bellows unit 16 will apply an axial force urging the seal face member 15 into sealing engagement with the seat 12, said force being sufficient to maintain sealing engagement between the seal face member 15 and seat 12 without causing excessive wear or over-stressing the bellows unit.

In the modification illustrated in Figure 5, the seal face member 15/bellows assembly 16 and seat 12/sleeve 13 assembly are preassembled concentrically of one another. The end 40 of sleeve 13 remote from seat 12 is swaged outwardly to form flange formation 41. The flange formation 41 is located such that it will engage the bellows unit 16 at the end thereof remote from seal face member 15 and hold the bellows in slight compression, so that seal face member 15 will engage seat 12. This unitised assembly may then be installed in the manner disclosed above, so that the flange 22 is located with respect to the housing and the sleeve 13 is located with respect to the shaft.

The flange formation 41 is positioned so that when it engages the bellows unit 16, the bellows unit 16 is compressed to a lesser degree than that to which it is compressed over its operational range, when the seal is installed. The flange formation 41 will thereby be clear of the bellows unit 16 when the seal is installed and will not interfere with operation of the seal.

Various modifications may be made without departing from the invention. For example, while in the above embodiment the bellows unit is made of metal, any suitable resilient material may be used. Furthermore, althoug the seal face member 15 is located in a formation 17 formed by the end of bellows unit 16, a separate retaining ring may be secured to the end of the bellows unit 16 for this purpose. The seat 12 may be secured to the shaft 10 by other means, for example retaining rings which are clamped to the shaft 10 in known manner. Moreover, the seal face member 15 may be secured to the shaft 10 by means of the bellows unit/retaining ring assembly 16/20 while the seat 12 is secured to the housing 11 in suitable manner. While in the above embodiment the flange 22 abuts housing 11, the flange 22 may be located with respect to some other datum, for example to accommodate axial tolerances.

While in the method of producing the bellows unit/ retaining ring assembly 16/20 described above a load cell 30 controls movement of the ram 31, other means of control to apply a predetermined axial load to the bellows unit 16 may be used. Instead of using a stepped ram, the spatial relationship between the bellows unit and retaining ring may be achieved by other means, for example electro/mechanical devices.

**Claims**

1. A mechanical face seal for providing a seal between a pair of relatively rotatable components (10, 11) comprising a first seal face member (12) adapted to be secured in fluid tight manner and in fixed axial and rotational relationship with respect to one component (10) and a second seal face member (15) adapted to be secured in fluid tight manner in fixed rotational relationship but movable axially of the other component (11) by means of a resilient bellows unit (16), said bellows unit (16) being adapted to be secured with respect to its associated component by means of a tubular retaining ring (20), characterised in that said retaining ring (20) has a plane cylindrical portion (21) defining a cylindrical face and means (22) to locate it axially with respect to the associated component (11), one end (18) of the bellows unit (16) engaging the cylindrical face of the plane cylindrical portion (21) of the retaining ring (20) and being secured thereto in fluid tight manner.

2. A mechanical face seal according to Claim 1 characterised in that the retaining ring (20) is a press fit in a bore of the associated component (11).

3. A mechanical face seal according to Claim 1 or 2 characterised in that a flange formation (22) on the retaining ring (20) is adapted to abut the associated component (11) to provide axial location of the retaining ring (20) with respect to its associated component (11).

4. A mechanical face seal according to any one of the preceding claims characterised in that the second seal face member (15) is located in a retaining formation formed by a cylindrical end formation (17) of the bellows unit (16).

5. A mechanical face seal according to any one of Claims 1 to 4 characterised in that the bellows unit (16) is secured to the retaining ring (20) by welding, brazing or bonding with an adhesive.

6. A mechanical face seal according to any one of the preceding claims characterised in that the bellows unit (16) is made of metal.

7. A mechanical face seal according to any one of Claims 1 to 6 characterised in that the first seal face member (12) is located on a retaining sleeve (13) which is a press fit on the component (10) associated with the first seal face member (12).

8. A mechanical face seal according to Claim 7 characterised in that the second seal face member (15)/bellows unit (16) assembly is located axially of the first seal face member (12)/retaining sleeve (13) assembly, a flange formation (41) on the retaining sleeve (13) engaging the bellows unit (16) at the end thereof remote from the second seal face member (15), the retaining sleeve (13) holding the bellows unit (16) in slight compression when the first and second seal face members (12, 15) engage, prior to installation of the seal with respect to the relatively rotatable components (10, 11).

9. A method of producing a mechanical face seal in which a first seal face member (12) is adapted to be secured in fluid tight manner and fixed axial relationship to one of a pair of relatively rotatable components (10) and a second seal face member (15) is adapted to be secured in fixed rotational relationship but movable axially of the other component (11) by means of the resilient bellows unit (16), the bellows unit (16) being adapted to be secured to its associated component (11) by means of a tubular retaining ring (20), characterised in that said method comprises: compressing the bellows unit (16) axially to a predetermined axial load, locating a tubular retaining ring (20) relative to the bellows unit (16) so that a cylindrical face of a plane cylindrical portion (21) of the retaining ring (20) is engaged by one end (18) of the bellows unit (16) and the other end (17) of the bellows unit (16) is spaced axially of a locating formation (22) on the retaining ring (20) by a predetermined distance, and securing the end (18) of the bellows unit (16) to the cylindrical face of the plane cylindrical portion (21) of the retaining ring (20) in fluid tight manner.

10. A method according to Claim 9 characterised in that the bellows unit (16) is compressed to a predetermined axial load by means of a first ram (31), the retaining ring (20) being positioned with respect to the bellows unit (16) by means of a second ram (32), the second ram (32) being coaxial with the first ram (31) and having a first formation (33) for engagement of the locating formation (22) of the retaining ring (20) and a second formation (34) for engagement of a corresponding formation (35) on the first ram (31), so that when the second formation (34) engages the corresponding formation (35) on the first ram (31), the end of the bellows unit (16) remote from that engaging the retaining ring (20) will be spaced axially of the locating formation (22) on the retaining ring (20) by a predetermined distance.

11. A method according to Claim 9 or 10 characterised in that the bellows unit (16) is located on a load cell (30) and is compressed axially by a ram (31), the load cell (30) controlling movement of the ram (31) so that the bellows unit (16) is compressed to a predetermined load.

12. A method according to any one of Claims 9 to 11 characterised in that the end (18) of the bellows unit (16) which engages the cylindrical face of the plane cylindrical portion (21) of the retaining ring (20) is a slight interference fit with respect thereto.

13. A method according to any one of Claims 9 to 12 characterised in that the bellows unit (16) is secured to the retaining ring (20) by welding, brazing, or bonding by means of an adhesive.

14. A method according to any one of Claims 9 to 13 characterised in that the retaining ring (20) is a press fit within an axial bore of its associated component (11) and the first seal face member (12) is mounted on a retaining sleeve (13) which is a press fit upon an axial surface of its associated component (10), the retaining ring (20) and retaining sleeve (13) being pressed axially onto their associated components (11, 10) by means of a ram, said ram having a first formation which engages the locating formation (22) on the retaining ring (20) and a second formation which engages the retaining sleeve (13), the ram being moved to press the retaining ring (20) and retaining sleeve (13) simultaneously on to their associated components (11, 10), until the formation (22) on the retaining ring (20) is set to an axial position relative to any other datum.

15. A method according to any one of Claims 9 to 14 characterised in that the first seal face member (12) is mounted on a retaining sleeve (13), the first seal face member (12)/retaining sleeve (13) assembly is positioned coaxially of the second seal face member (15)/bellows unit (16) assembly with the first and second seal face members (12, 15) engaging, and a flange formation (41) is raised on the retaining sleeve (13) to engage the bellows unit (16) at the end (18) thereof remote from the second seal face member (15) and hold the bellows unit (16) under slight compression prior to installation of the seal.

FIG 1

FIG 2

FIG 3

FIG 4

FIG 5